# EUROPEAN PATENT SPECIFICATION

(11) **EP 3 671 019 B1**
(45) Date of publication and mention of the grant of the patent: **31.08.2022**
(21) Application number: 18425105.6
(22) Date of filing: 21.12.2018
(51) Int. Cl.: F21S 43/237, F21S 43/239, F21S 43/241, F21S 43/243, F21S 43/249, F21S 43/247, F21S 43/14, F21S 41/24, F21S 41/148, B60Q 3/62, B60Q 3/64, B60Q 3/66, F21S 43/31, B60Q 1/00

(54) **VEHICLE LIGHTING AND/OR SIGNALLING DEVICE**
FAHRZEUGBELEUCHTUNGS- UND/ODER -SIGNALVORRICHTUNG
DISPOSITIF D'ÉCLAIRAGE ET/OU DE SIGNALISATION AUTOMOBILE

(43) Date of publication of application: 24.06.2020
(73) Proprietor: Marelli Automotive Lighting Italy S.p.A., 10078 Venaria Reale (TO) (IT)
(72) Inventor: Sacca', Alessandro, I-10078 Venaria Reale, Torino (IT); Paroni, Sara, I-10078 Venaria Reale, Torino (IT)
(74) Representative: Mitola, Marco

(56) References cited:
- EP-A2- 2 889 529
- WO-A1-2017/168387
- DE-A1-102014 110 347
- DE-A1-102015 204 747
- DE-A1-102017 119 500
- FR-A1- 2 804 493
- FR-A1- 3 042 751
- JP-A- 2017 010 840

## Description

### FIELD OF APPLICATION

The present invention relates to a vehicle lighting and/or signalling device.

### STATE OF THE ART

The term vehicle lighting and/or signalling device is used herein in a very broad sense so as to include a vehicle light, both rear and front, the latter also called a headlamp, or headlight.

This therefore includes a sidelight, an indicator light, a brake light, a rear fog light, a reverse light, a dipped beam headlight, a main beam headlight and the like.

In addition, the term is also intended to mean a courtesy light, dashboard or part of it; therefore, the vehicle lighting and/or signalling device may be placed both internally and externally to the vehicle.

As is known, said vehicle lighting and/or signalling devices can be used both to illuminate and to send visual signals.

For these purposes, said devices comprise a plurality of lighting portions having different colours and different levels of luminance (also according to the regulations to be complied with) and the like.

In particular, the need is felt to create vehicle lights that can perform at least two of said lighting and/or signalling functions using the same portions of the emitting surface. In other words, due to space and/or aesthetic requirements, the need is felt to use the same portions of the emitting surface to perform alternately, or even in unison, two distinct lighting and/or signalling functions.

For example, the same emitting surface may be required to realize both the side light function and the indicator light function. Obviously, this is an example, since it is also possible to integrate the functions of brake light, rear fog light, reverse light, dipped-beam light, main-beam light and so on. The important thing is that there are at least two distinct light sources which when activated alternately or simultaneously can activate lighting portions at least partially overlapping each other to perform respective lighting or signalling functions.

There are some solutions in the art that use the same light guide equipped with LED light sources controlled independently of each other and shaped, together with the respective input and light guide surfaces, to generate light beams at lighting portions which are at least partially overlapping. These known solutions, however, have the drawback of not allowing the emission of homogeneous and clearly distinguishable light portions, since the shape of the respective light guides determines a significant dispersion of light beams with consequently less homogeneous lighting portions being obtained. Such solutions are disclosed, for example, by

EP 2 889 529 A2 and FR 3 042 751 A1.

### PRESENTATION OF THE INVENTION

The need is therefore felt in the art to provide a vehicle lighting and/or signalling device that allows the aforementioned technical effects to be obtained, i.e. lighting portions at least partially overlapping each other to be obtained, while ensuring a high homogeneity of lighting.

Such need is satisfied by a vehicle lighting and/or signalling device according to claim 1.

Other embodiments of the present invention are described in the dependent claims.

### DESCRIPTION OF THE DRAWINGS

Further characteristics and advantages of the present invention will be more clearly comprehensible from the description given below of its preferred and non-limiting embodiments, wherein:

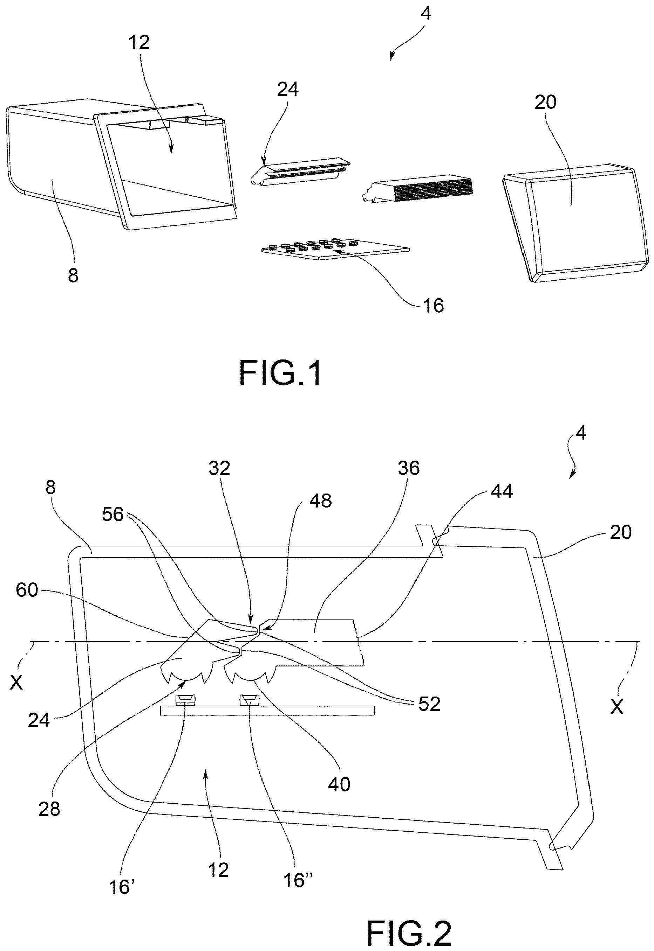

figure 1 shows a perspective view, in separate parts, of a lighting and/or signalling device according to one embodiment of the present invention;
figure 2 shows a cross-section view, in an assembled configuration, of the lighting and/or signalling device in figure 1;

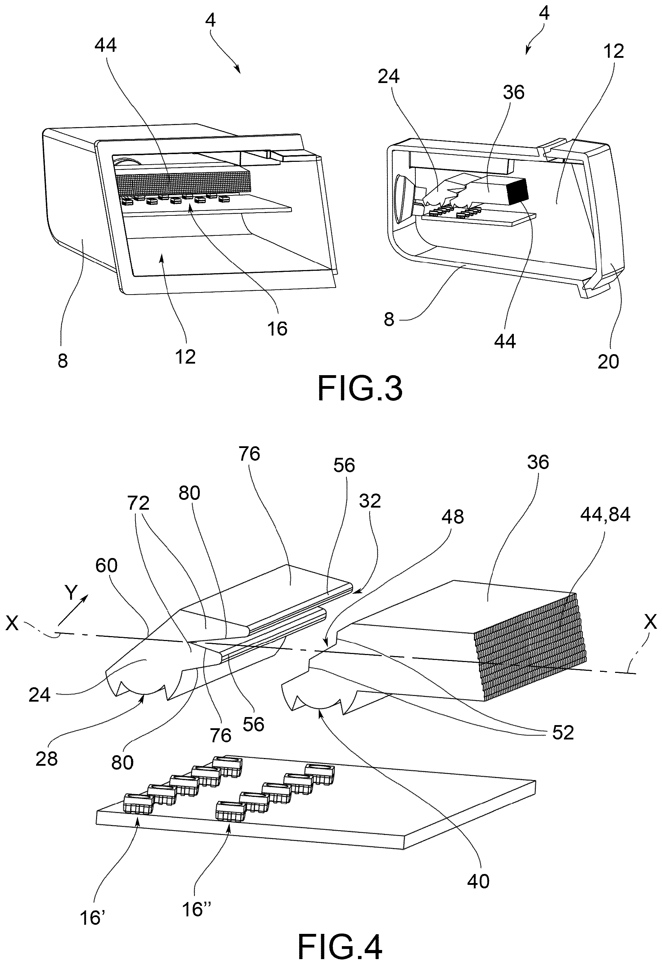

figure 3 shows two perspective views, in an assembled configuration, respectively total and in cross-section, of the lighting and/or signalling device in figure 1;

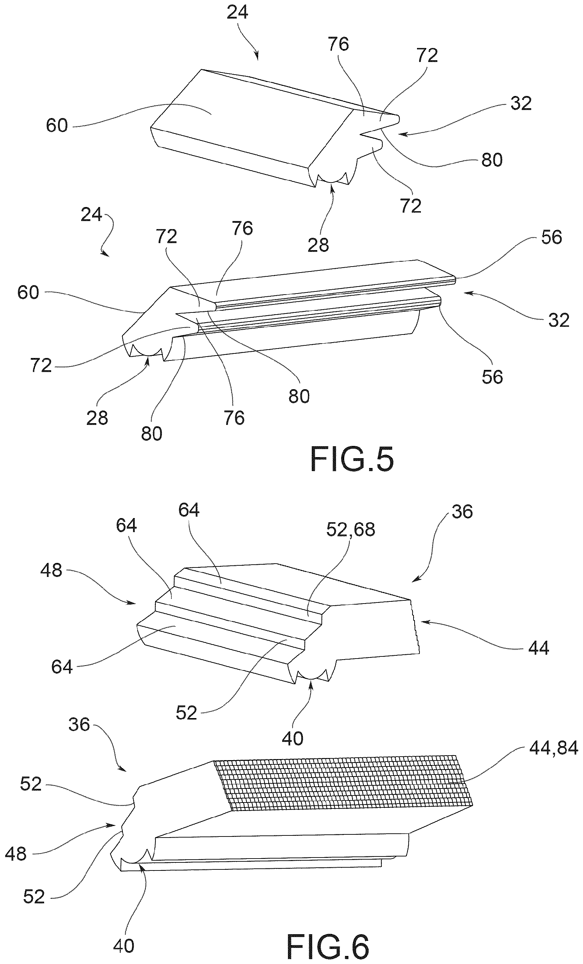

-figures 4-6 show perspective views, from different angles, of some components of the lighting and/or signalling device in figure 1;
figure 7 shows a partial cross-section view of a lighting and/or signalling device according to a further embodiment of the present invention;
figure 8 shows a partial cross-section view of a lighting and/or signalling device according to a further embodiment of the present invention.

The elements or parts of elements common to the embodiments described below will be indicated using the same reference numerals.

### DETAILED DESCRIPTION

With reference to the aforementioned figures, reference numeral 4 globally denotes a vehicle light to which the following discussion will refer, without by so doing detracting from its general application.

As mentioned above, the term lighting and/or signalling device is understood to mean indifferently a rear vehicle light or a front vehicle light, the latter also known as a headlight or headlamp, comprising an outside light of the vehicle having a lighting and/or signalling function, such as for example a side light, which may be a front, back, side position light, a direction indicator light, a brake light, a rear fog light, a reversing light, a low beam headlight, a high beam headlight, and the like.

In addition, the term lighting and/or signalling device also means an interior courtesy light, a dashboard or part of it, a display and so forth.

Consequently, as better described below, in its signalling function the device may comprise the possibility of sending luminous signals, logos, but also written and luminous messages of any kind.

The lighting and/or signalling device 4 comprises a container body or housing 8, usually of polymeric material, which generally allows the attachment of the lighting and/or signalling 4 device to the relative vehicle or to any type of support.

For the purposes of the present invention, the container body or housing 8 may be any shape, size and assume any position: for example, the container body 8 need not be directly associated to the body or other external fixtures of the associable vehicle.

As seen, the container body 8 may also be associated inside the vehicle, e.g. on the instrument panel, dashboard, parcel shelf and so forth.

The container body 8 delimits a containment seat 12 that houses a plurality of components of said lighting and/or signalling device and in particular LED light sources 16.

Preferably, said light sources 16 are LED light sources.

The container body 8 may for example be associated, at least partially in closing, to a lenticular body 20 so as to close said containment seat 12 housing the at least one LED light source 16.

For the purposes of the present invention the lenticular body 20 may be external to the vehicle lighting and or signalling device 4, so as to define at least one outer wall of the vehicle lighting and/or signalling device directly subject to the atmosphere.

The lenticular body 20 closes the containment seat 12 and is suitable to be crossed by the beam of light produced by the light source 16 which is transmitted to the outside of the containment seat 12. In particular, the lenticular body 20 is arranged to cover a downstream light output wall 44 of a downstream light guide 36, as better described below.

To such purpose, the lenticular body 20 is made of at least partially transparent or semi-transparent or translucent material, and may also comprise one or more opaque portions, so as to allow in any case the at least partial crossing of the light beam produced by the light source.

According to possible embodiments, the material of the lenticular body 20 is a resin such as PMMA, PC and the like.

The lighting and/or signalling device of the present invention comprises at least two separately powered and activated light sources 16',16" comprising an upstream light source 16' and a downstream light source 16" relative to a prevailing propagation direction X-X of respective emitted light beams.

It should be noted that the prevailing propagation direction X-X does not necessarily have to be understood as the emission direction of the light beam leaving the light source, but as the overall propagation direction of the light beam introduced and transmitted inside the subsequent light guide, as described below. Therefore, the concept of upstream and downstream must be understood with respect to this prevailing propagation direction X-X; consequently, the upstream light source 16' is the one that generates a light beam that is located overall upstream of the beam generated by the downstream light source 16''.

The lighting and/or signalling device 4 comprises, as mentioned above, an upstream light guide 24, provided with an upstream light input portion 28 (called incoupling), facing the upstream light source 16' so as to receive in input the light beam produced by the latter and to emit it in output through an upstream light output wall 32.

In particular, the light beam emitted by the upstream light source 16' penetrates the upstream light guide 24, through the upstream light input portion 28, and, by total internal reflection, is reflected until it reaches the upstream light output wall 32 from which it exits, as better described below.

The lighting and/or signalling device 4 further comprises a downstream light guide 36 provided with a downstream light input portion 40 (called incoupling), facing the downstream light source 16" so as to receive the light beam produced by the latter and emit it in output through a downstream light output wall 44.

Said light guides 24,36 are arranged side by side in series with each other with respect to the prevailing propagation direction, so that the light beam emitted by the upstream light output wall 32 is channelled through an intermediate wall 48 of the downstream light guide 36 and by this reflected and transmitted through the downstream light output wall 44.

Advantageously, the upstream light guide 24 is shaped so as to transfer, by total internal reflection, the light beam emitted by the upstream light source 16' from the upstream light output wall 32 to the intermediate wall 48 of the downstream light guide 36.

Furthermore, the intermediate wall 48 comprises at least one input window 52 counter-shaped relative to a corresponding output window 56 of the upstream light output wall 32.

The term counter-shaped means that the two input 52 and output 56 windows have substantially the same geometry, i.e. they are offset from each other. In this way, if a collimated light beam crosses in output the upstream output window 56, the same beam, entering through the downstream input window 52 will maintain the same collimation inside the downstream light guide 36. Obviously, what is described does not apply to any non-collimated light rays entering through the double passage consisting of the output window 56 and the input window 52. If there is no collimation upstream, the light beam entering the input window 52 may propagate inside the downstream light guide 36 according to the normal total internal reflection (TIR) without being collimated.

According to one embodiment, said input window 52, and thus also its counter-shaped output window 56, is substantially perpendicular to the prevailing propagation direction X-X.

Preferably, said upstream and downstream light guides 24,36 are separated and spaced apart so that their respective upstream light output walls 32 and intermediate wall 48 are adjacent and aligned with each other.

Preferably, the upstream light guide 24 comprises at least one upstream collimation wall 60 shaped to collimate the rays produced by the upstream light source 16' and to direct them, collimated, towards the output window 56 of said upstream light output wall 32.

According to possible embodiments, said upstream collimation wall 60 is a wall having a planar or parabolic profile. Typically for polymeric materials used in the vehicle lights the plane profile is a profile inclined by 45 degrees with respect to said prevailing propagation direction X-X.

According to one embodiment, the intermediate wall 48 comprises at least one downstream collimation wall 64 shaped to collimate the rays produced by the downstream light source 16" and to collimate them towards the downstream light output wall 44.

According to a possible embodiment, the intermediate wall 48 is provided with an embossed or satin-finish surface 68 so as to achieve a diffusion effect of the light rays incidental thereon.

Preferably, said embossed or satin-finish surface 68 involves said at least one input window 52 of the intermediate wall 48. The purpose of said embossed or satin-finish surface 68 is to diffuse the light beams incident thereon, coming from the upstream light output wall 32 and appropriately diffuse them inside the downstream light guide 36.

According to one embodiment, the upstream light guide 24, at the upstream light output wall 32, comprises at least one protrusion 72 delimited by a pair of inclined walls 76,80 and ending with said output window 56.

In particular, said inclined walls 76,80 are shaped to reflect the light beams produced by the upstream light source 16', by total internal reflection, and to channel them all towards said output window 56. Such light beams involving the inclined walls 76,80 lose the collimation defined by the upstream light input portion 28 and by the upstream collimation wall 60 and enter the downstream light guide 36 through the input windows 52 inclined with respect to the prevailing propagation direction X-X. However, such light beams are transmitted in output by the downstream light output wall 44 maintaining the total internal reflection condition (TIR) inside the downstream light guide 36.

According to a preferred embodiment, two input windows 52 are provided on the intermediate wall 48 counter-shaped with respect to two corresponding output windows 56 of the upstream light output wall 32, wherein the input windows 52 and the output windows 56 are offset from each other with respect to said prevailing propagation direction X-X.

Preferably, each of the two output windows 56 of the upstream light output wall 32 is arranged on a respective protrusion 72.

In general, the intermediate wall 48 may comprise a plurality of input windows 52 offset from each other along the prevailing propagation direction X-X and substantially perpendicular to said prevailing propagation direction X-X.

Said input windows 52 are interspersed between portions of intermediate wall 48 parallel to each other, so as to homogeneously reflect the light beams produced by the downstream light source 16". Preferably, said intermediate wall portions 48 are downstream collimation walls 64 so as not only to reflect but also to collimate the light beam produced by the downstream light source 16' ' .

Preferably, the downstream light output wall 44 of the downstream light guide 36 is provided with optics 84 suitable to diffuse the light beam in output.

For example, said optics 84 may comprise a satin-finish, optical pillows and the like.

Finally, it should be noted that the above description refers to upstream and downstream light guides equipped with at least one upstream light source 16' and at least one downstream light source 16". In fact, very often the light guides have a depth such as to provide a row of upstream light sources 16' and a row of downstream light sources, with respect to a transverse direction Y, perpendicular to the prevailing propagation direction X-X. Obviously, the above description applies to all the light sources 16',16" extending along said transverse direction.

The functioning of a vehicle lighting and/or signalling device according to the present invention will now be described.

In particular, as seen, the light sources 16', 16" can be activated separately and/or simultaneously, depending on the lighting and/or signalling requirements.

If the upstream light sources 16 are activated, the light beam produced by these is emitted into the upstream light guide 24, through the upstream light input portion 28. Then the beam is reflected by the upstream collimation wall 60 towards the upstream light output wall 32.

The collimated and non-collimated rays come out of upstream light guide 24 through the output windows 56; in fact, the remaining walls of the upstream light guide 24 are shaped to achieve a total internal reflection that directs the light rays towards said output windows 56.

The collimated rays entering the input window 52 maintain their collimation inside the downstream light guide 36 thanks to the counter-shaping between the input windows 52 and the output windows 56. The non-collimated rays entering the downstream light guide 36 continue their non-collimated path, inside said downstream light guide 36, by total internal reflection to then come out through the downstream light output wall 44.

On the downstream light output wall 44 the light rays are in turn diffused by the optics 84 so as to have a homogeneously illuminated emitting surface.

Furthermore, the light rays emitted by the downstream light source 16" are reflected and possibly collimated by the intermediate wall 48 and/or by the downstream collimation wall 64, so as to propagate towards the downstream light output wall 44.

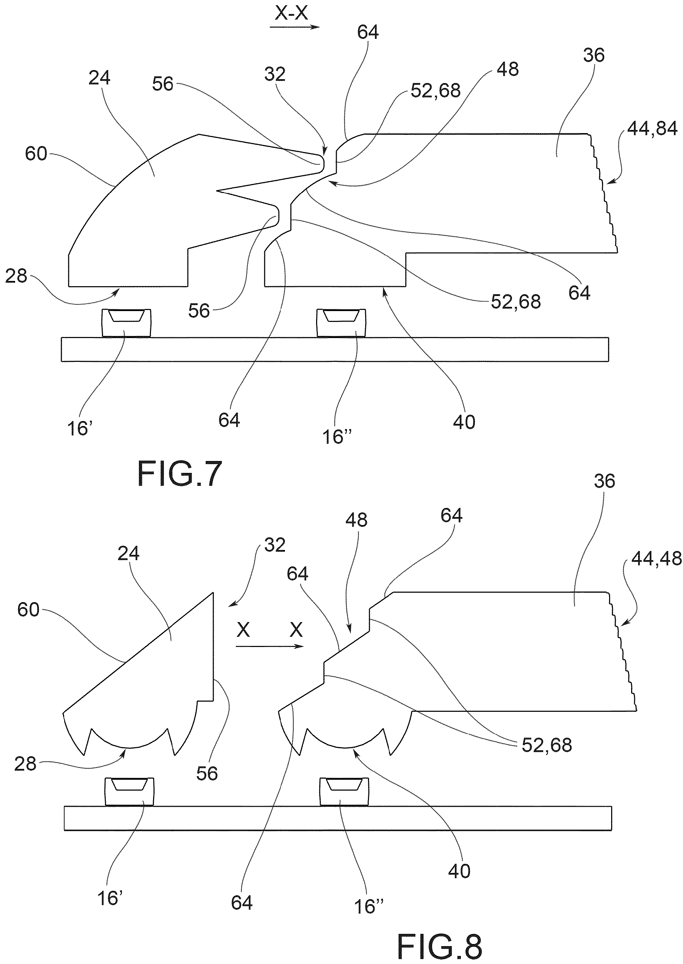

It should be noted that the presence of the embossed or satin-finish surface 68 serves to uniform the light beams emitted by the upstream light source 16', while it can diffuse the light beams coming from the upstream light guide 24 (embodiment in figure 8).

As may be appreciated from the description, the present invention makes it possible to overcome the drawbacks mentioned of the prior art.

In particular, the automotive lighting and/or signalling device according to the present invention makes it possible to realize the dual lighting and/or signalling function using the same emitting surface portions.

Both functions make it possible to obtain a homogeneous and uniformly lit emitting surface, avoiding any presence of luminous spots or uneven areas.

Obviously, the lighting functions can be obtained through the same emitting surface that receives the light beams coming from the downstream light output wall. This reduces the overall dimensions of the lighting and/or signalling device.

A person skilled in the art may make numerous modifications and variations to the lighting and/or signalling devices described above so as to satisfy contingent and specific requirements while remaining within the scope of protection of the invention as defined by the following claims.

## Claims

1. Lighting and/or signalling device (4) for the automotive sector, comprising:
at least two separately powered and activated light sources (16',16") comprising an upstream light source (16') and a downstream light source (16") relative to a prevailing propagation direction (X-X) of respective emitted light beams,
- an upstream light guide (24), provided with an upstream light input portion (28), facing the upstream light source (16') so as to receive in input the light beam produced by the latter and to emit it in output through an upstream light output wall (32),
- a downstream light guide (36) provided with a downstream light input portion (40), facing the downstream light source (16") so as to receive the light beam produced by the latter and emit it in output through a downstream light output wall (44),
- said upstream and downstream light guides (24,36) being arranged side by side in series with each other with respect to said prevailing propagation direction(X-X), so that the light beam emitted by the upstream light output wall (32) is channelled through an intermediate wall (48) of the downstream light guide (36) and by this is reflected and transmitted through the downstream light output wall (44),
**characterised in that**
the upstream light guide (24) is shaped so as to transfer, by total internal reflection, the light beam emitted by the upstream light source (16') from the upstream light output wall (32) to the intermediate wall (48) of the downstream light guide (36),
**characterized in that**
the intermediate wall (48) comprises at least one input window (52) counter-shaped relative to a corresponding output window (56) of the upstream light output wall (32), wherein said input window (52) is substantially perpendicular to the prevailing propagation direction (X-X),
wherein the intermediate wall (48) further comprises at least one downstream collimation wall (64) shaped to collimate the rays produced by the downstream light source (16'') and to collimate them towards the downstream light output wall (44).

2. The lighting and/or signalling device (4) according to claim 1, wherein the upstream light guide (24) comprises at least one upstream collimation wall (60) shaped to collimate the rays produced by the upstream light source (16') and to direct them, collimated, towards the output window (56) of said upstream light output wall (32).

3. The lighting and/or signalling device (4) according to claim 2, wherein said upstream collimation wall (60) is a wall having a planar or parabolic profile.

4. The lighting and/or signalling device (4) according to any of the claims from 1 to 3, wherein the intermediate wall (48) is provided with an embossed or satin-finish surface (68) so as to achieve a diffusion effect of the light rays incidental thereon.

5. The lighting and/or signalling device (4) according to claim 4, wherein said embossed or satin-finish surface (68) involves said at least one input window (52) of the intermediate wall (48).

6. The lighting and/or signalling device (4) according to any of the claims from 1 to 5, wherein the upstream light guide (24), at the upstream light output wall (32), comprises at least one protrusion (72) delimited by a pair of inclined walls (76,80) and ending with said output window (56), said inclined walls (76,80) being shaped to reflect the light beams produced by the upstream light source (16'), by total internal reflection, and to channel them all towards said output window (56).

7. The lighting and/or signalling device (4) according to any of the claims from 1 to 6, wherein said upstream and downstream light guides (24,36) are separated and spaced apart so that their respective upstream light output walls (32) and intermediate wall (48) are adjacent and aligned with each other.

8. The lighting and/or signalling device (4) according to any of the claims from 1 to 7, wherein two input windows (52) are provided on the intermediate wall (48) counter-shaped with respect to two corresponding output windows (56) of the upstream light output wall (32), wherein the input windows (52) and the output windows (56) are offset from each other with respect to said prevailing propagation direction (X-X).

9. The lighting and/or signalling device (4) according to claim 8, wherein the intermediate wall (48) comprises a plurality of input windows (52) offset from each other along the prevailing propagation direction (X-X) and substantially perpendicular to said prevailing propagation direction (X-X).

10. The lighting and/or signalling device (4) according to claim 9, wherein said input windows (52) are interspersed between portions of intermediate wall (48) parallel to each other, so as to homogeneously reflect the light beams produced by the downstream light source (16").

11. The lighting and/or signalling device (4) according to any of the claims from 1 to 10, wherein the downstream light output wall (44) of the downstream light guide (36) is provided with optics (84) suitable to diffuse the light beam in output.

12. The lighting and/or signalling device (4) according to claim 11, wherein said optics (84) comprise a satin-finish, optical pillows and the like.

13. The lighting and/or signalling device (4) according to any of the claims from 1 to 12, wherein the lighting device (4) comprises a container body (8) delimiting a containment seat (12) housing said upstream and downstream light guides (24,36) with their respective light sources (16), said containment seat (12) being closed by a lenticular body (20) arranged to cover the downstream light output wall (44) of the downstream light guide (36).

14. The lighting and/or signalling device (4) according to any of the preceding claims, wherein said light sources (16) are LED light sources.

## Patentansprüche

1. Leucht- und/oder Signalvorrichtung (4) für den Automobilsektor, umfassend:
wenigstens zwei separat angetriebene und aktivierte Lichtquellen (16', 16"), umfassend eine vorgelagerte Lichtquelle (16') und eine nachgelagerte Lichtquelle (16") relativ zu einer vorherrschenden Ausbreitungsrichtung (X-X) jeweiliger emittierter Lichtstrahlen,
eine vorgelagerte Lichtführung (24), welche mit einem vorgelagerten Lichteingangsabschnitt (28) bereitgestellt ist, welcher der vorgelagerten Lichtquelle (16') zugewandt ist, um am Eingang den durch die Letztere erzeugten Lichtstrahl zu empfangen und ihn am Ausgang durch eine vorgelagerte Lichtausgangswand (32) zu emittieren,
eine nachgelagerte Lichtführung (36), welche mit einem nachgelagerten Lichteingangsabschnitt (40) bereitgestellt ist, welcher der nachgelagerten Lichtquelle (16") zugewandt ist, um den durch die Letztere erzeugten Lichtstrahl zu empfangen und ihn am Ausgang durch eine nachgelagerte Lichtausgangswand (44) zu emittieren,
wobei die vorgelagerte und die nachgelagerte Lichtführung (24, 36) Seite an Seite in Reihe zueinander in Bezug auf die vorherrschende Ausbreitungsrichtung (X-X) angeordnet sind, so dass der durch die vorgelagerte Lichtausgangswand (32) emittierte Lichtstrahl durch eine Zwischenwand (48) der nachgelagerten Lichtführung (36) kanalisiert wird und dadurch durch die nachgelagerte Lichtausgangswand (44) reflektiert und übertragen wird,
**dadurch gekennzeichnet, dass**
die vorgelagerte Lichtführung (24) derart geformt ist, dass sie, durch eine totale interne Reflexion, den durch die vorgelagerte Lichtquelle (16') emittierten Lichtstrahl von der vorgelagerten Lichtausgangswand (32) zu der Zwischenwand (48) der nachgelagerten Lichtführung (36) überträgt,
**dadurch gekennzeichnet, dass**
die Zwischenwand (48) wenigstens ein Eingangsfenster (52) umfasst, welches relativ zu einem entsprechenden Ausgangsfenster (56) der vorgelagerten Lichtausgangswand (32) gegengeformt ist, wobei das Eingangsfenster (52) im Wesentlichen senkrecht zu der vorherrschenden Ausbreitungsrichtung (X-X) ist,
wobei die Zwischenwand (48) ferner wenigstens eine nachgelagerte Kollimationswand (64) umfasst, welche derart geformt ist, dass sie die durch die nachgelagerte Lichtquelle (16") erzeugten Strahlen kollimiert und sie in Richtung der nachgelagerten Lichtausgangswand (44) kollimiert.

2. Leucht- und/oder Signalvorrichtung (4) nach Anspruch 1, wobei die vorgelagerte Lichtführung (24) wenigstens eine Kollimationswand (60) umfasst, welche derart geformt ist, dass sie die durch die vorgelagerte Lichtquelle (16') erzeugten Strahlen kollimiert und sie, kollimiert, in Richtung des Ausgangsfensters (56) der vorgelagerten Lichtausgangswand (32) leitet.

3. Leucht- und/oder Signalvorrichtung (4) nach Anspruch 2, wobei die vorgelagerte Kollimationswand (60) eine Wand ist, welche ein ebenes oder parabolisches Profil aufweist.

4. Leucht- und/oder Signalvorrichtung (4) nach einem der Ansprüche von 1 bis 3, wobei die Zwischenwand (48) mit einer geprägten oder satinierten Oberfläche (68) bereitgestellt ist, um einen Diffusionseffekt der darauf einfallenden Lichtstrahlen zu erreichen.

5. Leucht- und/oder Signalvorrichtung (4) nach Anspruch 4, wobei die geprägte oder satinierte Oberfläche (68) das wenigstens eine Eingangsfenster (52) der Zwischenwand (48) involviert.

6. Leucht- und/oder Signalvorrichtung (4) nach einem der Ansprüche von 1 bis 5, wobei die vorgelagerte Lichtführung (24), an der vorgelagerten Lichtausgangswand (32), wenigstens einen Vorsprung (72) umfasst, welcher durch ein Paar geneigter Wände (76, 80) begrenzt ist und mit dem Ausgangsfenster (56) endet, wobei die geneigten Wände (76, 80) derart geformt sind, dass sie die durch die vorgelagerte Lichtquelle (16') erzeugten Lichtstrahlen durch eine totale interne Reflexion reflektieren und sie alle in Richtung des Ausgangsfensters (56) kanalisieren.

7. Leucht- und/oder Signalvorrichtung (4) nach einem der Ansprüche von 1 bis 6, wobei die vorgelagerte und die nachgelagerte Lichtführung (24, 36) separiert und voneinander beabstandet sind, so dass deren jeweilige vorgelagerten Lichtausgangswände (32) und die Zwischenwand (48) einander benachbart und zueinander ausgerichtet sind.

8. Leucht- und/oder Signalvorrichtung (4) nach einem der Ansprüche von 1 bis 7, wobei zwei Eingangsfenster (52) an der Zwischenwand (48) bereitgestellt sind, welche in Bezug auf zwei entsprechende Ausgangsfenster (56) der vorgelagerten Lichtausgangswand (32) gegengeformt sind, wobei die Eingangsfenster (52) und die Ausgangsfenster (56) in Bezug auf die vorherrschende Ausbreitungsrichtung (X-X) voneinander versetzt sind.

9. Leucht- und/oder Signalvorrichtung (4) nach Anspruch 8, wobei die Zwischenwand (48) eine Mehrzahl von Eingangsfenstern (52) umfasst, welche entlang der vorherrschenden Ausbreitungsrichtung (X-X) voneinander versetzt sind und im Wesentlichen senkrecht zu der vorherrschenden Ausbreitungsrichtung (X-X) sind.

10. Leucht- und/oder Signalvorrichtung (4) nach Anspruch 9, wobei die Eingangsfenster (52) zwischen Abschnitten der Zwischenwand (48) eingefügt sind, welche parallel zueinander sind, um die durch die nachgelagerte Lichtquelle (16") erzeugten Lichtstrahlen homogen zu reflektieren.

11. Leucht- und/oder Signalvorrichtung (4) nach einem der Ansprüche von 1 bis 10, wobei die nachgelagerte Lichtausgangswand (44) der nachgelagerten Lichtführung (36) mit einer Optik (84) bereitgestellt ist, welche dazu geeignet ist, den Lichtstrahl am Ausgang zu streuen.

12. Leucht- und/oder Signalvorrichtung (4) nach Anspruch 11, wobei die Optik (84) ein Satin-Finish, optische Kissen und dergleichen umfasst.

13. Leucht- und/oder Signalvorrichtung (4) nach einem der Ansprüche von 1 bis 12, wobei die Leuchtvorrichtung (4) einen Behälterkörper (8) umfasst, welcher eine Behältnisaufnahme (12) begrenzt, welche die vorgelagerte und die nachgelagerte Lichtführung (24, 36) mit deren jeweiligen Lichtquellen (16) unterbringt, wobei die Behältnisaufnahme (12) durch einen linsenförmigen Körper (20) geschlossen ist, welcher dazu eingerichtet ist, die nachgelagerte Lichtausgangswand (44) der nachgelagerten Lichtführung (36) abzudecken.

14. Leucht- und/oder Signalvorrichtung (4) nach einem der vorhergehenden Ansprüche, wobei die Lichtquellen (16) LED-Lichtquellen sind.

## Revendications

1. Dispositif d'éclairage et/ou de signalisation (4) pour le secteur automobile, comprenant :
au moins deux sources lumineuses alimentées et activées séparément (16', 16") comprenant une source lumineuse en amont (16') et une source lumineuse en aval (16") par rapport à une direction de propagation dominante (X-X) de faisceaux lumineux émis respectifs,
- un guide lumineux en amont (24), pourvu d'une partie d'entrée lumineuse en amont (28), faisant face à la source lumineuse en amont (16') de manière à recevoir, en entrée, le faisceau lumineux produit par celle-ci et à l'émettre en sortie à travers une paroi de sortie lumineuse en amont (32),
- un guide lumineux en aval (36), pourvu d'une partie d'entrée lumineuse en aval (40), faisant face à la source lumineuse en aval (16") de manière à recevoir le faisceau lumineux produit par celle-ci et à l'émettre en sortie à travers une paroi de sortie lumineuse en aval (44),
- lesdits guides lumineux en amont et en aval (24, 36) étant agencés côte à côte en série l'un avec l'autre par rapport à ladite direction de propagation dominante (X-X), de sorte que le faisceau lumineux émis par la paroi de sortie lumineuse en amont (32) soit canalisé à travers une paroi intermédiaire (48) du guide lumineux en aval (36) et soit réfléchi et transmis par celle-ci à travers la paroi de sortie lumineuse en aval (44),
**caractérisé en ce que**
le guide lumineux en amont (24) est façonné de manière à transférer, par réflexion interne totale, le faisceau lumineux émis par la source lumineuse en amont (16') depuis la paroi de sortie lumineuse en amont (32) à la paroi intermédiaire (48) du guide lumineux en aval (36),
**caractérisé en ce que**
la paroi intermédiaire (48) comprend au moins une fenêtre d'entrée (52) présentant une forme complémentaire à une fenêtre de sortie correspondante (56) de la paroi de sortie lumineuse en amont (32), dans lequel ladite fenêtre d'entrée (52) est sensiblement perpendiculaire à la direction de propagation dominante (X-X),
dans lequel la paroi intermédiaire (48) comprend en outre au moins une paroi de collimation en aval (64) façonnée pour collimater les rayons produits par la source lumineuse en aval (16") et pour les collimater vers la paroi de sortie lumineuse en aval (44).

2. Dispositif d'éclairage et/ou de signalisation (4) selon la revendication 1, dans lequel le guide lumineux en amont (24) comprend au moins une paroi de collimation en amont (60) façonnée pour collimater les rayons produits par la source lumineuse en amont (16') et pour les diriger, collimatés, vers la fenêtre de sortie (56) de ladite paroi de sortie lumineuse en amont (32).

3. Dispositif d'éclairage et/ou de signalisation (4) selon la revendication 2, dans lequel ladite paroi de collimation en amont (60) est une paroi présentant un profil plan ou parabolique.

4. Dispositif d'éclairage et/ou de signalisation (4) selon l'une quelconque des revendications 1 à 3, dans lequel la paroi intermédiaire (48) est pourvue d'une surface gaufrée ou de finition satinée (68) de manière à obtenir un effet de diffusion des rayons lumineux incidents sur celle-ci.

5. Dispositif d'éclairage et/ou de signalisation (4) selon la revendication 4, dans lequel ladite surface gaufrée ou de finition satinée (68) implique ladite au moins une fenêtre d'entrée (52) de la paroi intermédiaire (48).

6. Dispositif d'éclairage et/ou de signalisation (4) selon l'une quelconque des revendications 1 à 5, dans lequel le guide lumineux en amont (24), à la paroi de sortie lumineuse en amont (32), comprend au moins une saillie (72) délimitée par une paire de parois inclinées (76, 80) et se terminant avec ladite fenêtre de sortie (56), lesdites parois inclinées (76, 80) étant façonnées pour réfléchir les faisceaux lumineux produits par la source lumineuse en amont (16'), par réflexion interne totale, et pour tous les canaliser vers ladite fenêtre de sortie (56).

7. Dispositif d'éclairage et/ou de signalisation (4) selon l'une quelconque des revendications 1 à 6, dans lequel lesdits guides lumineux en amont et en aval (24, 36) sont séparés et espacés l'un de l'autre de sorte que leurs parois de sortie lumineuse en amont respectives (32) et leur paroi intermédiaire (48) soient adjacentes et alignées entre elles.

8. Dispositif d'éclairage et/ou de signalisation (4) selon l'une quelconque des revendications 1 à 7, dans lequel deux fenêtres d'entrée (52) sont prévues sur la paroi intermédiaire (48) présentant une forme complémentaire à deux fenêtres de sortie correspondantes (56) de la paroi de sortie lumineuse en amont (32), dans lequel les fenêtres d'entrée (52) et les fenêtres de sortie (56) sont décalées l'une de l'autre par rapport à ladite direction de propagation dominante (X-X).

9. Dispositif d'éclairage et/ou de signalisation (4) selon la revendication 8, dans lequel la paroi intermédiaire (48) comprend une pluralité de fenêtres d'entrée (52) décalées l'une de l'autre le long de la direction de propagation dominante (X-X) et sensiblement perpendiculaires à ladite direction de propagation dominante (X-X).

10. Dispositif d'éclairage et/ou de signalisation (4) selon la revendication 9, dans lequel lesdites fenêtres d'entrée (52) sont intercalées entre des parties de paroi intermédiaire (48) parallèles l'une à l'autre, afin de réfléchir de manière homogène les faisceaux lumineux produits par la source lumineuse en aval (16").

11. Dispositif d'éclairage et/ou de signalisation (4) selon l'une quelconque des revendications 1 à 10, dans lequel la paroi de sortie lumineuse en aval (44) du guide lumineux en aval (36) est pourvue d'une optique (84) apte à diffuser le faisceau lumineux en sortie.

12. Dispositif d'éclairage et/ou de signalisation (4) selon la revendication 11, dans lequel ladite optique (84) comprend une finition satinée, des coussins optiques et des éléments similaires.

13. Dispositif d'éclairage et/ou de signalisation (4) selon l'une quelconque des revendications 1 à 12, dans lequel le dispositif d'éclairage (4) comprend un corps de contenant (8) délimitant un siège de confinement (12) logeant lesdits guides lumineux en amont et en aval (24, 36) avec leurs sources lumineuses respectives (16), ledit siège de confinement (12) étant fermé par un corps lenticulaire (20) agencé pour recouvrir la paroi de sortie lumineuse en aval (44) du guide lumineux en aval (36).

14. Dispositif d'éclairage et/ou de signalisation (4) selon l'une quelconque des revendications précédentes, dans lequel lesdites sources lumineuses (16) sont des sources lumineuses à DEL.
